# EUROPEAN PATENT APPLICATION

(11) **EP 2 990 086 A2**
(43) Date of publication of application: **02.03.2016**
(21) Application number: 15180276.6
(22) Date of filing: 07.08.2015
(51) Int. Cl.: A63F 13/42, A63F 13/30

(54) **PROGRAM, GAME SYSTEM, AND CONTROL METHOD**

(30) Priority: 27.08.2014 JP 2014172973
(71) Applicant: Square Enix Co., Ltd., Tokyo 160-8430 (JP)
(72) Inventor: TAIT, Alex, Montreal, Québec H3A 1L4 (CA)
(74) Representative: Pitchford, James Edward

(57) **Abstract**

A computer that executes processing for game content, for which a plurality of kinds of roles are arranged, in which operation corresponding to at least a portion of the roles is assigned to players, is caused to execute processing for acquiring device information including at least one of a specification of the computer and a usage condition, processing for determining one role of the plurality of kinds of roles based on the acquired device information, and processing for executing the processing for the game content for the determined one role in accordance with operation input by a player.

## Description

### BACKGROUND OF THE INVENTION

### Field of the Invention

The present invention relates to a program, a game system, and a control method, and particularly to an electronic game configured to enable differing user experiences depending on the client device.

### Description of the Related Art

In recent years, in the field of electronic games, and in particular online games such as MMORPGs (Massively Multiplayer Online Role Playing Games), because the same game title (game content) is playable on multiple different console devices such as PlayStation4^{™}, Xbox One^{™}, iPhone^{™}, PCs, or the like, so-called multiplatform development or cross-platform development is performed (Japanese Patent Laid-Open No. 2010-521744). Programs for game content developed in this way are provided for each device where local changes (or localizations) corresponding to capabilities of the respective console devices are applied. In other words, because a screen resolution or refresh rate that the console device is capable of outputting at, rendering capabilities, an instruction set that is executable in an operating system, a user interface for receiving operation input of a player, or the like, are different, modification of the game program to match capabilities, specifications, or the like, is required.

For example, because the operation input that can be input differs between a console device for which a game pad is the user interface and a console device for which only a touch panel is the user interface, for each invokable action in the game, it is necessary to implement processing corresponding to input methods by which input is possible on each of the user interfaces, and to implement processing for detection of these input methods. Also, because rendering objects, text, or the like, can be expressed in greater detail if, for example, the number of pixels of the screen display is large, it is possible to configure a range in a game field displayed within the screen to be wider. On the other hand, when the number of pixels displayed on a screen is small, there is a trade-off between in how much detail rendering objects, text, or the like, are expressed, and how widely the range in the game field displayed within the screen is made to be. In other words, because when rendering objects are expressed in greater detail this requires rendering the rendering objects with a corresponding number of pixels, the range in the field expressed on the screen becomes narrower. Conversely, if the range in the field expressed on the screen is wider, the rendering objects are rendered more roughly. Also, because there are differences in rendering capabilities, there are some actual situations that development costs, time for debugging, or the like, commonly become large for multiplatform or cross-platform development targeted at multiple console devices having differing capabilities, or for so-called program porting or emulation.

However, for game content developed so as to adapt to each console device on which the game is executed as described above, differing user experiences may arise depending on the console device that the player uses irrespective of the fact that the game title is the same. In other words, the different user experiences are caused by differences due to changes in screen configuration or changes in the technique of operation input due to local changes as described above, and also differences in the existence or absence of functions that can be realized due to differences in capabilities.

Accordingly, there is the possibility that while sales are strong for some of the console device versions for which operation input is easy for a particular game, for example, for other console devices it is difficult to recover development costs. Also, when the game content realizes a game in which players play against one another, a difference in user experience due to the console device used may cause unfairness in a head-to-head game, and may adversely affect player's interest. Also, when a plurality of players play cooperatively, such as in an MMORPG game, there is the possibility that it is difficult for players with console devices that have inferior communication performance, for example, to participate in the game play. Also, when parameters for synchronization between players, such as operation character positional information, exist, the possibility that processing for waiting an amount of time until the processing performed on a console device having inferior communication performance reaches the server becomes necessary, and this causes an obstacle to the smooth progress of the game play.

### SUMMARY OF THE INVENTION

The present invention was conceived in view of the above described problems. At least one embodiment of the present invention provides a program, a game system, and a control method for realizing various gameplay experiences for a single game in accordance with specifications of a console device.

The present invention in its first aspect provides a program as specified in claims 1 to 10.

The present invention in its second aspect provides a game system as specified in Claim 11.

The present invention in its third aspect provides a control method as specified in Claim 12.

Further features of the present invention will become apparent from the following description of exemplary embodiments (with reference to the attached drawings).

### BRIEF DESCRIPTION OF THE DRAWINGS

Fig. 1 is a block diagram illustrating a functional configuration of a game console 100 according to a first embodiment, a first variation and a second variation of the present invention.
Fig. 2 is a flowchart for exemplifying game processing executed on the game console 100 according to the first embodiment of the present invention.
Fig. 3 is a flowchart for exemplifying role determination processing according to the first embodiment of the present invention.
Fig. 4 is a view for illustrating a system configuration of a game system according to the second embodiment of the present invention.
Fig. 5 is a block diagram for illustrating a functional configuration of a server 500 according to a second embodiment and a third variation of the present invention.
Fig. 6 is a flowchart for exemplifying game processing executed the server 500 according to the second embodiment of the present invention.
Fig. 7 is a flowchart for exemplifying role determination processing according to the second embodiment of the present invention.

### DESCRIPTION OF THE EMBODIMENTS

### [First Embodiment]

Exemplary embodiments of the present invention will be described hereinafter in detail, with reference to the accompanying drawings. Note that the embodiments explained below explain an example in which the present invention is applied to a generic game console such as a so-called home-use game console as an example of a computer for executing processing in accordance with game content. However, the present invention is applicable to any device capable of executing processing for game content wherein a plurality of kinds of roles that can cause differing actions in the same space in which the game content is expressed are arranged.

### <Game Console 100 Configuration>

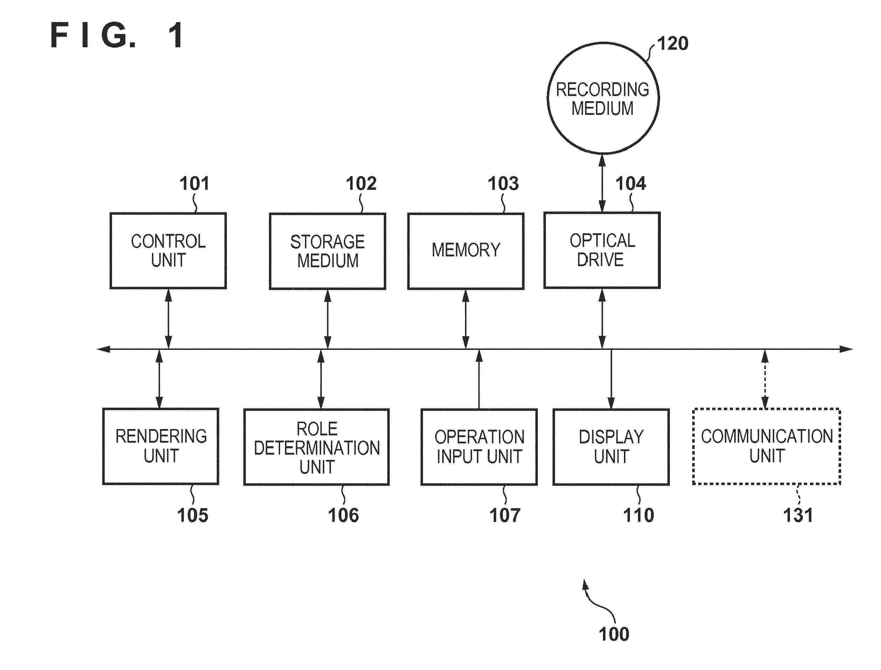

FIG. 1 is a block diagram for showing a functional configuration of a game console 100 according to embodiments of the present invention.

A control unit 101 is, for example, a CPU, and the control unit 101 controls the operation of blocks that the game console 100 comprises. The control unit 101 reads operation programs for the blocks which are stored in a storage medium 102 or a recording medium 120 inserted into an optical drive 104, for example, and the operation of the blocks is controlled by loading into a memory 103 and executing the operating programs.

The storage medium 102 is a storage apparatus, such as a rewritable, non-volatile memory, an HDD, or the like, for example, which is comprised in the game console 100 and performs permanent data storage. In the present embodiment, the storage medium 102 stores information such as parameters that are necessary for the operation of the blocks, in addition to the operating programs of the blocks that the game console 100 comprises. Also, the optical drive 104 is an interface that the game console 100 has which is for performing reading/writing of data with the recording medium 120, which may be a Blu-ray^{™} disk, a cartridge that complies with a predetermined standard, or the like, for example. In the present embodiment, various data that is necessary for the provision of game content to the player is stored in the recording medium 120, which is connected to the optical drive 104, and this data may be read from the recording medium 120 and loaded into the memory 103 as appropriate in conjunction with execution of processing for the game content. Also, configuration may be taken such that virtual disk image data and game programs read in advance from the recording medium 120, or virtual disk image data and game programs received from an external server via a communication unit 131, which is illustrated in broken lines since it is not necessarily required, are, at least in part, copied or stored in the storage medium 102 and loaded into the memory 103. Also, the memory 103 is a volatile storage apparatus such as a DRAM, for example. In the present embodiment, the memory 103 is used not only as a loading area for the blocks read from the storage medium 102 or the recording medium 120 connected to the optical drive 104, but also as a storage area in which information such as intermediate data output by operations of the blocks is stored temporarily.

A rendering unit 105 is, for example, a GPU, and the rendering unit 105 performs generation of screens (game screens) for game content. The rendering unit 105 performs game screen rendering processing based on information including a viewpoint determined by the control unit 101, rendering objects arranged on the screen, and the state of each object, the effects to apply thereto, or the like, when rendering a 3D scene as a game screen, for example. The rendering unit 105 may be configured to include a GPU memory, a VRAM, or the like (not shown). In such cases, various data of rendering objects necessary for rendering is loaded into the GPU memory, and the rendering unit 105 performs processing for rendering of the pixels of a game screen on the VRAM by performing predetermined computation using that data.

A role determination unit 106 determines, in game content provision, roles in a game that allows a player that operates the game console 100 to handle operation input. In the game content according to the present invention, multiple roles are prepared irrespective of whether or not a player can operate in the game. A "role" in the present specification is a concept applied to each character (operation character, player character) controlled such that predetermined actions are performed in accordance with operation input performed by a player in a game, or characters (NPC: Non-Player Character) for which actions are controlled by predetermined programs, predetermined motion data, or the like, for example. In other words, a "role" is a concept which may be a subject of actions caused in a game, and may be something that indicates the type of subject that realizes the interactability of content, i.e. progress conditions changing due to a chain of actions in game content. For example, in a so-called FPS (First Person Shooting) game in which it is possible to have a head-to-head battle, operation characters which are operation targets of players, and NPCs (friend characters) which operate in accordance with instructions of players, and NPCs (enemy characters) which operate so as to block actions of other operation characters are understood to take on respectively different roles. Also, roles need not indicate only cases of a player "playing" a particular character in a role in this way; in a so-called RTS (Real-Time Strategy) game, for example, a kind of concept which makes command to each of a plurality of types of characters but does not exist on a game field, is assigned to a player as a role.

In the present embodiment, game content that can be provided by the recording medium 120 being caused to connect to the optical drive 104 is so-called multiplatform supporting game content which is developed so that game play is possible on multiple different types of game consoles. In the present embodiment, the different types of game consoles are not limited to merely game consoles whose specifications, such as those of the circuit board configuration, hardware components that are used, or the like, are different; the different kinds of game consoles may include game consoles whose connected user interfaces, which are used for operation input, differ even though the specifications of the game consoles themselves are the same, or game consoles for which usage conditions such as one corresponding to applications that are activated simultaneously, the communication condition, or the like, differ. In the game console 100 of the present embodiment, information including at least one of the self-apparatus' specifications (including the user interface that is used) and usage conditions are stored in the storage medium 102, for example, as device information, and the role determination unit 106 determines roles in a game to handle operations by players based on the device information.

An operation input unit 107 is a user interface that is arranged on the game console 100 or is connected to the game console 100, such as a game pad, a joystick, a keyboard, a mouse, a touch panel, or the like, for example. The operation input unit 107 outputs a control signal to the control unit 101 corresponding to operation input performed by a player on a user interface when the operation input is detected.

A display unit 110 is a display apparatus that is connected to the game console 100, such as an LCD for example. Game screens generated by the rendering unit 105 are output and displayed on the display unit 110. Configuration may be taken such that the display unit 110 is formed in the body of the game console 100, or configuration may be taken such that the display unit 110 exists as a unit that is external to the game console 100, and that the display unit 110 receives game screen signals from the game console 100 via a predetermined interface and displays accordingly.

### <Game Processing>

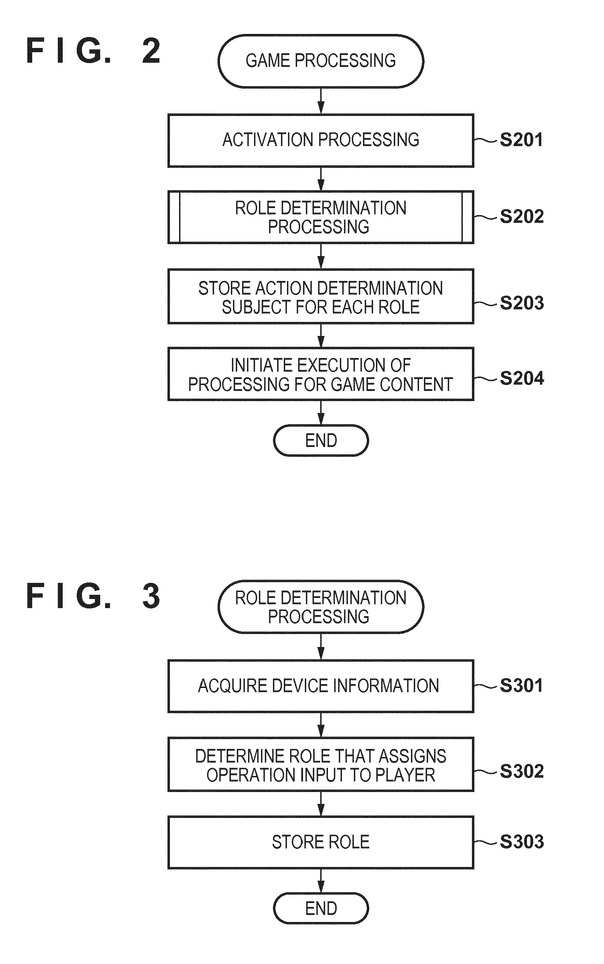

Explanation of specific processing will be given using the flowchart of Fig. 2 for game processing that is executed by an application for game content which is recorded on the recording medium 120 in the game console 100 of the present embodiment which has this kind of configuration. Processing corresponding to this flowchart can be implemented by the control unit 101 reading a corresponding processing program which is stored in the recording medium 120, for example, via the optical drive 104, loading it into the memory 103, and executing it. Note that the game processing will be explained as something that is initiated when an instruction to initiate the provision of game content (activation of an application for the game content) is made by a player, for example.

In step S201, the control unit 101 executes activation processing that is necessary for activation of the application for the game content.

In step S202, the role determination unit 106 executes role determination processing for determining roles in the game which assign operation input to players.

### <Role Determination Processing>

Here, detailed explanation will be given with reference to the flowchart of FIG. 3 for the role determination processing executed in the present embodiment.

In step S301, the role determination unit 106 acquires device information stored in the storage medium 102. The device information is information including at least one of a specification and a usage condition of a computer as explained above, and in the present embodiment it is assumed to include:
- identification information for identifying a model of the game console 100
- information of a user interface connected to the game console 100 (a kind of operation input detectable by the operation input unit 107).

In step S302, the role determination unit 106 determines a role that assigns operation input to a player from a plurality of roles that are predetermined for the game content based on the device information acquired in step S301. The role determination unit 106 may determine the role simply based on information as to what the model of the game console 100 is, for example, because it is possible to acquire in advance various capabilities of a general-purpose game console, information of an operation input interface that is arranged upon initial installation, or the like.

For example, a case can be considered in which the game console 100, which is identified by the device information, is a device such as a so-called smart phone which has a user interface with few physical buttons that can be used, and that detects touch operations on a touch panel as its main input. Because operation input for designating a particular position in a display region is easy in such a device, the role determination unit 106 may determine an operation character for an FPS viewpoint that performs shooting of a gun while advancing in a 3D scene of game content, for example, to be a role for assigning operation input to a player. Also, the role determination unit 106 may determine a role for managing a stock generation quantity, speed, or the like, in an RTS game, for example, to be a role for assigning operation input to a player because the physical area of a display region of a device such as a smart phone is small, and there are few kinds of operations that can be input.

Also, a case in which the game console 100, which is identified by the device information, is a device having a device orientation detection function can be considered, for example. Because this kind of device is generally capable of operation input by causing of the device itself or the operation input interface itself (which may be a game pad, or the like) to incline, the role determination unit 106 may determine a role for performing control of steering or maneuvering of a vehicle in a game, operation of a gun battery, a character that performs an attack with a bladed weapon, or a viewpoint position of a game screen provided to another player as a role that assigns operation input to a player.

Also, a case in which the game console 100, which is identified by device information, for example, is a so-called next generation console having high rendering capabilities can be considered. Because such a device can increase the display resolution at which game screens can be generated, the role determination unit 106 may determine a role, by which game play is possible at a macro viewpoint where the entirety of a game can be surveyed such as in an RTS, to be a role that assigns operation input to a player. Also, because such a device can maintain a high game screen refresh rate, the role determination unit 106 may determine a character for performing actions for which an operation input real-time capability (responsiveness in relation to operation input of the player) is required as a role for assigning operation input to a player.

Also, the information is not limited to being simply what model the game console 100 is; information of a user interface for a so-called a function extension which is connected as explained above may be included, for the role determination unit 106 to perform determination of roles. For example, in the case where a user interface, such as a keyboard, by which text input is easy, is connected to the game console 100, the role determination unit 106 may determine a role for making operating instructions towards another player in cooperative play to be a role that assigns operation input to a player. Also, in a case where a user interface that detects operations that a player actually performs using the player's own body is connected to the game console 100 for example, the role determination unit 106 may determine a character for performing fighting with an enemy character that matches the operations of the player to be a role that assigns operation input to the player.

In step S303, the role determination unit 106 stores in the memory 103 information of the determined role for assigning operation input to the player, and the role determination processing terminates.

In this way, it is possible to determine by the role determination processing one role from a plurality of roles arranged in advance for the game content of the present embodiment to be the role for which processing for game content in the game console 100 is executed. Note that in the present embodiment explanation is given having the player that uses the game console 100 be a single person for simplicity, but implementation of the present invention is not limited to this. In the case where multiple players that use the game console 100 exist, a common role may be determined based on the device information for these players though the characters differ, or differing roles may be determined for the operation input interfaces that each uses. For example, a character that performs maneuvering of an automobile may be assigned as a role to a player that uses an operation input interface having an orientation detection function, and a character of a role for riding together in the automobile and performing shooting may be assigned as a role to a player that uses an operation input interface having a touch operation detection function (in other words, the movement is left to the operation of the other player). In such a case, roles that make use of the characteristics of the operation input interfaces that the players are using are assigned respectively to the multiple players that are performing game play simultaneously on the game console 100, and thus it is possible to perform the role assignment suitably in the cooperative play, thereby be able to enhance the interest of the players in the game content.

After the determination of the role by the role determination processing, the control unit 101 in step S203 of the game processing sets so that determination of an action selected for a role for which operation input is not assigned to a player from the plurality of roles arranged in advance for the game content item be performed in accordance with processing that the control unit 101 predetermined, for example, for the role. Information of the action determination subject selected for each role is stored in the memory 103 similarly to in the role determination processing.

In step S204, the control unit 101 initiates execution of processing for game content based on information of the roles that assigns the operation input to the players and the information of the action determination subject selected for each role, stored in the memory 103. By this processing actions of operation characters for the roles for which operation input is assigned to the players, for example, are determined in accordance with the operation input performed by the players, and various parameter modifications are performed accompanying such actions. Also, in this processing, processing for determining an action based on processing which is predetermined for each other role is performed, and similarly various parameter modifications are performed accompanying the action. Then, based on the various parameters that are modified in this way, the rendering unit 105 performs rendering of a corresponding game screen, and initiates a screen output to the display unit 110 under the control of the control unit 101.

In this way, by virtue of the game processing of the present embodiment, it is possible to determine a role from a plurality of roles arranged in advance for game content based on device information, and to provide a player with game play for that role. In other words, it is possible to control execution of processing for game content for a role determined by the role determination processing in accordance with the operation input performed by the player. Also, a role that is suitable for the capabilities of the game console 100 and the operation input interface from roles arranged in advance for the game content is determined based on device information in the above described role determination processing to assign operation input to a player, and it is possible for players to experience a play style corresponding to the game console that is used for the same game content.

Additionally, for simplicity explanation was given in the present embodiment for the control unit 101 generating actions selected for a role, from a plurality of roles arranged in advance for the game content, for which operation input is not assigned to a player in accordance with predetermined processing, but implementation of the present invention is not limited to this. For example, the control unit 101 may execute processing for game content in a mode in which action selecting is not merely performed for a role for which operation input is not assigned to a player. Also, the operation input may be assigned by the control unit 101, for example, to a player using an external game console which is connected via the communication unit 131 to enable communication with an external device as is illustrated in the broken lines in FIG. 1. In such a case, the role determination processing may be similarly executed in the external game console, and a role may be determined to be a role that assigns operation input to a player based on device information. With this, even if capabilities of game consoles that a plurality of players use differ, it is possible for each player to play the same game content in a role suitable for their respective game consoles.

As explained above, a program for the present embodiment can realize various gameplay experiences in accordance with specifications, or the like, of console devices for a game content item.

### [First Variation]

In the above described embodiment, explanation was given for an example in which a role for assigning operation input to a player is determined based on identification information that identifies a model of the game console 100 and information of a user interface connected to the game console 100 (device information), but the information that is considered to be device information in the role determination processing is not limited to this.

Information of the capabilities of the game console 100 which are established by identification information which identifies the model of the game console 100, for example, is information which is published as a specification in advance for basic capabilities. However, because such basic capabilities indicate capabilities under ideal conditions, or capabilities in average usage conditions, these do not consider variations due to actual usage conditions of the game console 100. In this variation, explanation including an example for a method of performing role determination considering the current situation of the game console 100 is given below.

### <Role Determination Processing>

### (1. Communication Condition of the Game Console 100)

Processing for role determination in step S302 of the above described role determination processing may consider the current communication condition of the game console 100 in a case where the game console 100 comprises the communication unit 131, for example.

A case is considered in which the game console 100 is a device, such as a so-called smart phone, that performs communication in a game application when it is being executed, or in another application which is operating in the background of the application. In such a case, a portion of the processing resources in the game console 100 is spent on the communication, and therefore there is the possibility that there is a difference from the capabilities under the ideal conditions, or the capabilities in average usage conditions. Accordingly, in step S302 the role determination unit 106 may perform role determination considering the current communication condition of the game console 100. For example, the role determination unit 106 determines a role for assigning operation input to the player from the roles capable of realizing the corresponding processing with surplus resources after having excluded the resources used for communication.

For the communication condition, a communication rate, a possible transmission rate, or the like, for communication between the game console 100 and an external device may additionally be considered in a case where performance of data exchange with an external device is necessary in the progress of processing for the game. In such a case, the role determination unit 106 may determine a role for assigning operation input to a player from roles capable of covering the amount of data to be exchanged at the transmission rate, considering the transmission rate acquired as part of the communication condition.

Also, the communication condition is not limited to this, and the role determination unit 106 may determine a role that assigns operation input to a player considering a delay amount, an average occurrence of jitter, or the like, in data communication.

Note that the communication condition may include a communication rate (data communication rate), a connection state, or the like, when communication is performed during cooperative play or head-to-head play for the same game content with a player on an external device, when communication is performed directly with an external device such as in an ad hoc communication, for example, or when communication is performed through another external device such as a server or a host device.

### (2. Computational Capabilities of the Game Console 100)

Computation resources that can be allocated for processing for a game may fluctuate in the case where processing other than the processing for the game content is executed in parallel in the game console 100, and variation of available resources is not limited to the influence due to communication as described above. In other words, in a case where other applications operate in the background as explained above, such as in the case of backup processing which is executed at regular intervals, computation resources for such operation are consumed, and therefore the computation resources that can be allocated for the processing for the game may be reduced. Also, when there are multiple tasks on that are stacked, there is the possibility that computation resources cannot be sufficiently secured. Accordingly, the role determination unit 106 evaluates current computational capabilities of the game console 100 in accordance with usage conditions of computation resources based on processes that may hereafter be executed, or other processes that are currently executing, for example, and determines a role for assigning operation input to a player from roles capable of realizing corresponding processing with those capabilities.

Also, while hardware (an arithmetic apparatus) that commercial game consoles comprise, such as the control unit 101, which has computational capabilities is fixed, in a case where a device that has differing capabilities depending on the user that possesses the device, such as in the case of PCs, is used as the game console 100, not only is the above described device information but also detailed information of the computational capabilities of the arithmetic apparatus becomes necessary. Also, even with commercial game consoles, in the case where the arithmetic apparatus is configured to be exchangeable, the computational capabilities of the game console 100 cannot be determined simple by the device information. Accordingly, configuration may be taken such that the role determination unit 106 determines a role that assigns operation input to a player in accordance with what arithmetic apparatus (CPU, etc.) is used.

### (3. Rendering Capabilities of the Game Console 100)

Similarly, in a case where a device whose capabilities differ depending the user that possesses the device, such as in the case of PCs, is used as the game console 100, detailed information of rendering capabilities of a rendering apparatus that is used becomes necessary in addition to the device information as described above. Similarly, even with commercial game consoles, in the case where a rendering apparatus is configured to be exchangeable, the rendering capabilities of the game console 100 cannot be determined simple by the device information. Accordingly, configuration may be taken such that the role determination unit 106 determines a role that assigns operation input to a player in accordance with which rendering device (GPU, etc.) is used.

For example, because rendering processing for two viewpoints becomes necessary for a role in which not only a screen that shows in front of a vehicle, but also a screen that shows behind the vehicle, such as through a rearview mirror, are simultaneously displayed in the game screen, such as in a car racing game, the role determination unit 106 may exclude such a role from roles that assign operation input in the game console 100 when the necessary rendering capabilities cannot be sufficiently secured for a role for performing maneuvering of a vehicle.

Also, as explained above the display resolution(the number of pixels) of game screens to be generated, the refresh rate of game screens, or the like may be included in the rendering capabilities that are considered. In other words, in accordance with the refresh rate or the display resolution that is allowed by the rendering unit 105 of the game console 100, the role determination unit 106 may determine a suitable role such as a role for which it is advantageous that the refresh rate be high, a role that can be played even if the refresh rate is low, a role for which it is advantageous that the display resolution be high, or a role that is playable even if the display resolution is low, or the like, as the role that assigns operation input to the player in accordance with rendering capabilities.

Note that while explanation was given using the example of the communication condition, the computational capabilities, and the rendering capabilities as the current conditions of the game console 100 in the variation, other conditions in hardware or software that may have an influence on execution of processing for the game may be considered in the role determination processing. Also, it goes without saying that for the current conditions of the game console 100 that are considered, a plurality of conditions may be considered integrally.

### [Second Variation]

In the embodiment illustrated in the above described first embodiment, role determination is performed based on information that indicates a device classification, and therefore in the case where the user interface used for operation input is the same, generally the same role is determined by execution of the role determination processing for a player of a game console that is treated as being the same model, for example.

However, in the case where the game console 100 is configured to be able to realize cooperative play or head-to-head play by multiple players on the one unit, or in the case where the game console 100 is configured to be able to realize cooperative play or head-to-head play by multiple players by communicating directly or indirectly with an external device, a players' interest may be decreased if the roles assigned to the players are fixed to be the same every time. Also, this is not limited to content in which multiple players participate; a player's interest may decrease if effort such as usage of a different instance of the game console 100, or changing of an operation input interface is necessary for the player to experience a different role in game content.

For this reason, in step S302 of the role determination processing, the role determination unit 106 may perform processing as follows. For example, a role that assigns operation input to a player in role determination processing executed for game play the previous time may be stored and the role determination unit 106 may select a role that is different to that role in step S302. Also, in the case of game play in which mutual data communication is performed using the same game console, for example, in cooperative play or head-to-head play, the role determination unit 106 may assign a role that assigns operation input to a player of one of the game consoles in game play of a previous time to the player of the other game console in the next game play.

With such a configuration, it is possible to maintain the players' interest in the game content because it is possible to allow players using the game console 100 to perform game play with different roles to the game play of the previous time.

### [Second Embodiment]

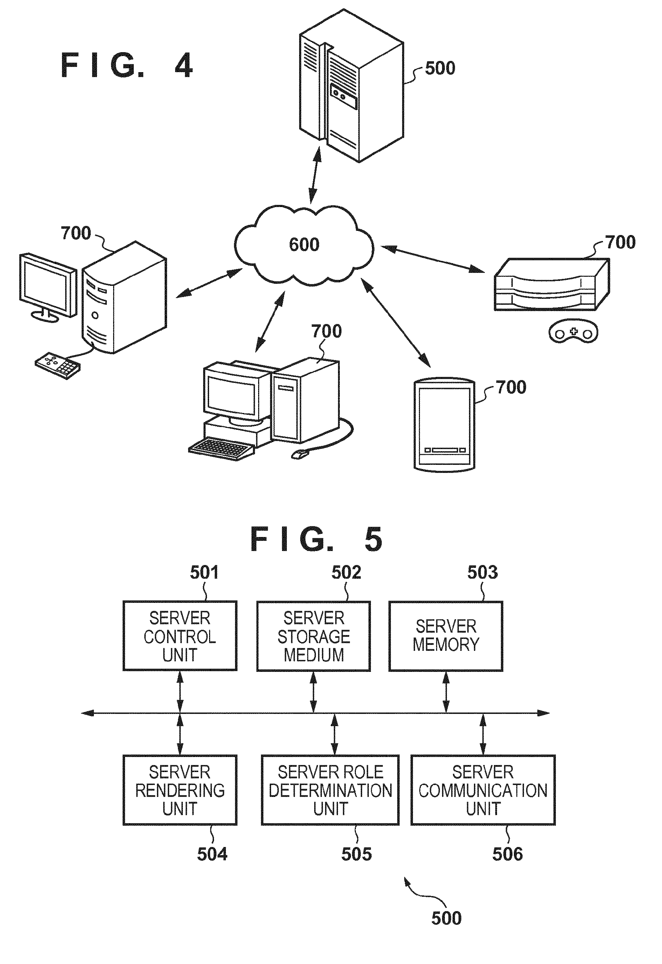

In the above described first embodiment, the first variation and the second variation, explanation was given for game processing being executed in the game console 100, to which an operation input interface is connected; however, implementation of the present invention is not limited to this. In the present embodiment, explanation is given for an example in which the present invention is applied to a so-called cloud game system in which game processing is executed in a server 500, which is arranged on a network 600, is shown in FIG. 4, and game screens that are generated by the execution of this processing are transmitted to client devices 700, such as the game console 100, which are connected via the network 600.

In the explanation of the present embodiment it is assumed that game content which the server 500 provides as a service is game content for a type of game in which multiple players simultaneously participate, i.e. game content in which a result corresponding operation input performed by multiple players can be reflected for other players that are also using the service. In other words, in the game content of the present embodiment, each player handles operation input for a role from roles arranged in advance for a virtual world corresponding to the game content. Consequently, actions that can be selected for a role that one handles oneself are reflected in game screens presented to other players, and situations in the game that are caused by actions that another player can select in accordance with operation input performed by that other player are reflected in game screens that are presented to oneself.

Additionally, for a game content that the server 500 of the present embodiment provides as a service, it is not necessarily required that roles which are assigned to each of the plurality of players playing the game content. In other words, a plurality of kinds of roles for which operation input for maneuvering a vehicle is assigned may be arranged, for example, and each player, for which the role is determined in the later described role determination processing according to the present embodiment, may handle operation input for maneuvering different vehicles (different vehicle objects) in a games.

Also, because the client devices 700 in the following explanation have the same functional configuration as the game console 100, explanation thereof is omitted.

### <Server 500 Configuration>

Explanation for the functional configuration of the server 500 for the game system of the present embodiment is given below with reference to FIG. 5.

A server control module 501 is, for example, a CPU, and the server control module 501 controls the operation of blocks that the server 500 comprises. The server control module 501 controls operation of the blocks by reading operating programs of the blocks stored in a server storage medium 502, for example, loading the programs into a server memory 503, and executing the programs.

The server storage medium 502 is a storage apparatus, such as a rewritable, non-volatile memory, an HDD, or the like, for example, which is comprised in the server 500 and performs permanent data storage. In the present embodiment, the server storage medium 502 stores information such as parameters that are necessary for the operation of the blocks, in addition to the operating programs of the blocks that the server 500 comprises. Also, the server storage medium 502 stores various data that is needed for service provision of game content to players, i.e. various data that is needed to generate game screens. This information and various data may be read from the server storage medium 502 as appropriate, and loaded into the server memory 503 in conjunction with execution of processing for the game content. Also, the server memory 503 is a volatile storage apparatus such as a DRAM, for example. In the present embodiment, the server memory 503 is used not only as a loading area for each of the blocks that is read from the server storage medium 502 but also as a storage area for storing temporarily information such as intermediate data that is output due to operations of the blocks.

A server rendering unit 504 is, for example, a GPU, and the server rendering unit 504 performs generation of screens (game screens) for game content. The server rendering unit 504 performs game screen rendering processing based on information including a viewpoint determined by the server control module 501, rendering objects arranged on the screen, and the state of each object, the effects to apply thereto, or the like, when rendering a 3D scene as a game screen, for example. The server rendering unit 504 may be configured to include a GPU memory, a VRAM, or the like (not shown). In such cases, various data of rendering objects necessary for rendering is loaded into the GPU memory, and the server rendering unit 504 performs processing for rendering of the pixels of a game screen on the VRAM by performing predetermined computation using that data. Note that in the present embodiment explanation is given having the server rendering unit 504 be arranged in the server 500 for simplicity, such that the server 500 has a rendering function, i.e. performing generation of game screens and performing the provision thereof to each of the client devices 700, but implementation of the present invention is not limited to this.

A server role determination unit 505 determines the role in the game that handles operation input for a player that operates one of the client devices 700 in service provision of the game content similarly to the role determination unit 106 of the first embodiment, the first variation and the second variation. In the present embodiment, the server role determination unit 505 determines a role that handles operation input for a player based on device information acquired from the device upon game play by the player of one of the client devices 700.

A server communication unit 506 is a communication interface that the server 500 comprises that performs transmission/reception of data with the client devices 700, which established connections via the network 600. In the game system of the present embodiment, the server communication unit 506 receives information of operation input made by a player on one of the client devices 700 when game play is performed on that client device 700. Predetermined analysis processing may be applied to the information of the operation input in the client device 700, and the information may be converted into information indicating which operation input was performed, or may be the information input into the client device 700 itself. In the latter case, a transformation into the information indicating which operation input is performed may be performed by the server control module 501. Also, the server communication unit 506 transmits to the client devices 700 game screens, where events caused by operation input performed the client devices 700 which are connected to the server 500, or a world in the game where results of the parameter update processing in the predetermined game are reflected, are rendered from viewpoints corresponding to the respective client devices 700. In the game system of the present embodiment, a game screen is transferred to the client device 700 as a frame of a moving image stream. At this time, the moving image stream may be encoded according to a predetermined type of encoding, and processing corresponding to the encoding may be performed by any one of for example the server control module 501, the server rendering unit 504, and the server communication unit 506.

### «Game Processing»

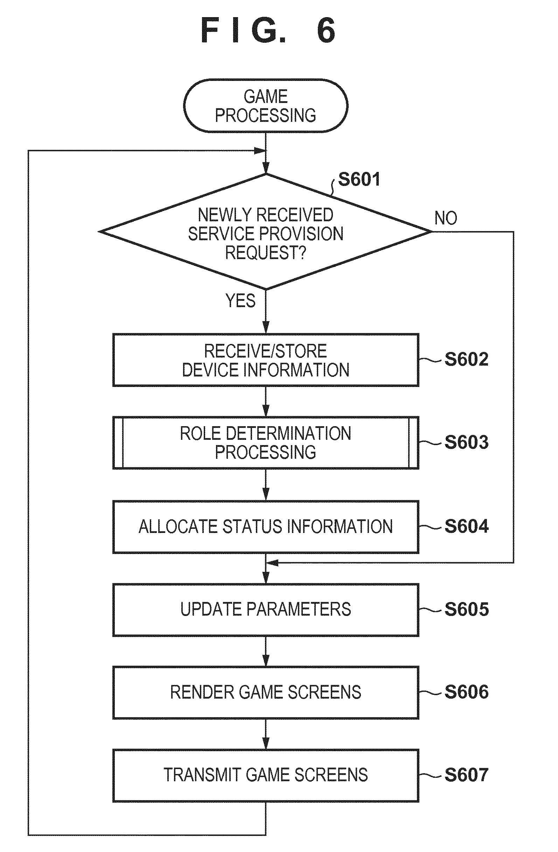

Specific processing of the game processing executed by the server 500 of the present embodiment comprising such elements is explained using a flowchart in FIG. 6.

Processing corresponding this flowchart can be realized by the server control module 501 for example reading a corresponding processing program stored in the server storage medium 502, loading the processing program into the server memory 503 and executing the processing program. Note, explanation is given for a case where the game processing is initiated for example when the server 500 is activated and goes into a state for functioning as a server.

In step S601, the server control module 501 determines whether or not a service provision request corresponding to the game content is newly received from one of the client devices 700 which has established a communication connection. The server control module 501 moves the processing to step S602 in cases where the server control module 501 determines that the service provision request is newly received, and moves the processing to step S605 in cases where the server control module 501 determines the service provision request is not received.

In step S602, the server control module 501 receives the device information comprised in the device from the client device 700 (the target client) from which the service provision request is newly received, and, for example, associates the device information with identification information of a player performing game play on the device, and stores the device information in the server memory 503. Note, the identification information of the player may be an account ID of the player included in the information for example exchanged upon the service provision request.

In step S603, the server role determination unit 505 executes the role determination processing, which determines one of roles in the game for assigning operation input to the player performing game play on the device for the target client.

### «Role Determination Processing»

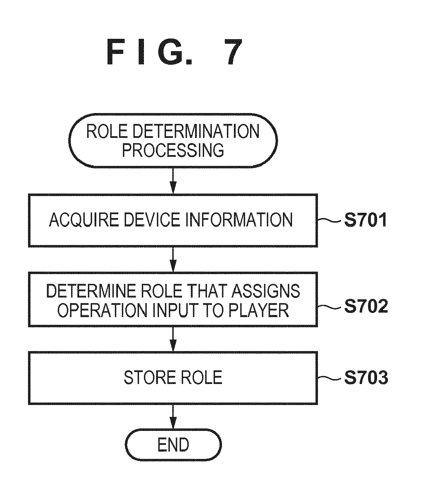

Here, detailed explanation will be given with reference to the flowchart of Fig. 7 for the role determination processing executed in the present embodiment.

In step S701, the server role determination unit 505 acquires the device information stored on the server storage medium 502. The device information may include any of the information explained in the above described first embodiment, the first variation and the second variation, but in the present embodiment:
- information for determining whether or not the target client is the general-purpose game console,
- identification information for identifying when a model when the target client is a general-purpose game console
- capabilities information indicating capabilities corresponding to moving image reproduction of the target client when it is not a general-purpose game console (the communication performance need not be included),
- communication state information indicating the communication condition with the target client (configuration may be taken such that it is based on an actual measurement value),
- interface information indicating the operation input interface connected to the target client,
- request quality information indicating the quality of a game screen such as that of a frame rate, a resolution, an image quality, or the like, which is required by the target client are included.

In step S702, the server role determination unit 505 determines a role for assigning operation input to a player of the target client from a plurality of roles predetermined for the game content based on the device information acquired in step S701. As explained above, in the game service provided by the server 500 of the present embodiment, the plurality of kinds of roles in the same virtual world corresponding to the game content are established in advance, and in this step the server role determination unit 505 assigns any of these roles as an operation input target for the player of the target client.

Each role may be something for which game screens provided to each of the client devices 700 is generated based on for example different visual field boundaries or viewpoint positions and orientations. Also a genre of a game performed by a player upon the game play may be different depending on the role. In other words, for example for a player of a role for which an upper layer viewpoint (such as a bird's-eye view where the entirety of a field can be surveyed) is assigned, a so-called a war simulation game, where the player controls game progress and is responsible for overall commands, such as those for making commands to an affiliated military, and thereby attacking/defending a territory, may be executed. Also, for example for a player of a role to which a middle layer viewpoint (such as a overhead view where a front including a part of the surroundings can be seen from behind of a vehicle) is assigned, a so-called driving simulation game, where the player causes a tank, an airplane, or the like, to proceed to a target location in accordance with a command made for a military to which the player belongs, may be executed. Alternatively, it may be a game configured so that bombardment, bombing, or the like using a gun battery is possible after proceeding. Also, for example for a player of a role for which a lower layer viewpoint (such as a first person view such as that of a foot soldier) is assigned, a so-called first person shooting game, where according to a command made to a military to which the player belongs, it is possible to move around a territory by walking or by military vehicle, and perform shooting foot soldiers or vehicles of the military of an opponent may be executed. Alternatively, configuration may be taken such that a player of a role to which a lower layer viewpoint is assigned cooperating with a player of a role to which a middle layer viewpoint is assigned who drives a vehicle by performing shooting using an emplacement arranged on the vehicle.

The server role determination unit 505 determines whether or not the service provision quality indicated by for example the request quality information in the device information firstly is appropriate based on the identification information or the capabilities information and the communication state information. The quality of the game screen indicated by the request quality information may be settable by a player using one of the client devices 700, but, for example, the appropriateness may be determined upon the service provision considering:
- the number of players receiving a service provision from the server 500 currently (the number client devices 700 connected to the server 500),
- data transmission rate between the target client and the server 500,
- the amount of a computation resources that can be devoted to processing corresponding to decoding and displaying of a game screen transmitted as a moving image stream, in accordance with the state of a task (i.e. executing) of another application in the target client,
or the like. Then, in a case where the service provision quality is not appropriate, the server role determination unit 505 updates the request quality information to suitable conditions for the current state of the server 500 and the target client. The updating may be performed accompanying a notification to the player and an optimization may be performed without performing the notification. Also, the server role determination unit 505 may refer to the request quality information after the appropriateness determination, extract a role capable of game play with game screens of the required quality, and determine one role assigning the operation input to the player of the target client out of the extracted roles considering interface information such as the first embodiment.

Note, in game content that the game system of the present embodiment as explained above provides as a service, in a case where a maximum number of players to whom the same role can be allocated is determined, the server role determination unit 505 may exclude a role that assigns operation input to a number of players that already reaches the maximum number from the assignment candidates in this step. Alternatively, for a role for which an upper limit is reached already, in a case where, for example, currently the communication condition with the client device 700 of a player to which operation input corresponding to that role is assigned is changing, or in a case where it is determined that it is advantageous to change the role depending on a capabilities comparison with a target client, the server role determination unit 505 may delete the assignment of the role to a player for which operation input corresponding to the role is already assigned, and assign that role to the player of the target client. In such a case, the server role determination unit 505 may process so as to assign a new role to the player whose assignment was cancelled.

In step S703, the server role determination unit 505 stores information of the role that assigns operation input to the player of the determined target client in the server memory 503, and the role determination processing terminates.

In this way, by the role determination processing, even in a game system such as that of the present embodiment, it is possible to determine a role considering the respective device for each player on one of the client devices 700 from which a request for provision of the service are received.

After the role determination by the role determination processing, the server control module 501 in step S604 of the game processing, allocates in the server memory 503, in association with for example an account ID, status information for an operation target character, for example, corresponding to a player of a target client, based on information of a role that assigns operation input to the player. Also, the server control module 501 stores, as information of a transmission destination for game screens, information of the target client in the server memory 503 similarly in association with the account ID. Also, in this step the server control module 501 performs initial setting processing for the game which is necessary for service provision to the target client.

In step S605, the server control module 501 performs update processing for various parameters corresponding to the game based on information of operation input performed on each of the client devices 700 to which the server 500 currently is performing service provision received within a period of a single frame based on a predetermined time, for example. In game content that the server 500 of the present embodiment provides, even if the roles, or the kinds of games that are executed in accompaniment of the roles differ as explained above, the results of game play by each player are reflected in one virtual world for the game content. Accordingly, prior to performing rendering of game screens that are transmitted to each of the client devices 700, the server control module 501 reflects the influence of operation input on the game play by updating parameters in this step.

In step S606, the server control module 501 causes the server rendering unit 504 to render game screens to transmit to each of the client devices 700 to which service provision is being performed which are included in the target clients, causes the server communication unit 506 to transmit the screens to the corresponding the client devices 700 in step S607, and returns the processing to step S601.

In this way, by virtue of the game processing of the present embodiment, it is possible to suitably assign a plurality of roles which are arranged in advance for game content that the game system performs service provision of to each player in accordance with conditions corresponding to the client devices of the players using the system, or the service provision.

### [Variation 3]

In the above described second embodiment, explanation was given for a configuration in which the server 500 generates game screens and provides them to the client devices 700, but implementation of the present invention is not limited to this. While in the present invention generation of game screens may be performed on each of the client devices 700 as in conventional MMORPGs, the present invention may be also implemented such that even in a game system in which information of operation input made by each player on the respective client devices 700 that are connected to the server and executing processing in accordance with the same game content is reflected in screens presented to other players via the server 500.

In such a case, the server 500 may function as a previous server that performs parameter management for the game content, and the server role determination unit 505 may perform role determination in accordance with a connection request upon the starting of the game on the client devices 700, for example, and return that information. Then, the client devices 700 may execute processing for the game under the determined role. Note that during the game play, the server control module 501 may receive information of operation input from the client devices 700 which are connected via processing corresponding to the game content and information of the results of processing operation input, and transmit updated parameters to the client device 700 after updating the parameters for each player's role (character). Then, the rendering of game screens that reflect these parameters may be performed in the client device 700.

### Other Embodiments

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. Also, the game system and the control method according to the present invention are realizable by a program executing the methods on one or more computers. The program is providable/distributable by being stored on a computer-readable storage medium or through an electronic communication line.

## Claims

1. A program for causing a computer to execute processing for game content, for which a plurality of kinds of roles are arranged, and in which operation corresponding to at least a portion of the roles is assigned to players, the program comprising:
processing (S301) for acquiring device information including at least one of a specification and a usage condition of the computer;
processing (S302) for determining one role of the plurality of kinds of roles based on the acquired device information; and
processing (S204) for executing the processing for the game content for the determined one role in accordance with operation input by a player.

2. The program according to claim 1, wherein the plurality of kinds of roles are roles for which selectable actions are performed in the same space in a game for the game content.

3. The program according to claim 1, wherein a range of a space, which is included in a screen generated by execution of the processing for the game content, in a game differs depending on the plurality of kinds of roles.

4. The program according to claim 1, wherein the device information includes at least one of information for identifying the computer or a model of the computer, a calculation capability of the computer, a rendering capability of the computer, a task status of the computer, a resolution of a screen generated by execution of the processing for the game content, a refresh rate for screens generated by execution of the processing for the game content, a communication condition of the computer, and information of a user interface that the computer has.

5. The program according to claim 1, wherein the program causes the computer to further execute processing (S204) for generating operation input for a portion of the roles other than the one role from the plurality of kinds of roles when the processing for the game content is executed.

6. The program according to claim 1, wherein the device information includes information that identifies the computer, and
in the processing for determining, a role from the plurality of kinds of roles that is different to a role determined a previous time for the same computer is determined.

7. The program according to claim 1, wherein the device information includes information that identifies a model of the computer, and
in the processing for determining, differing roles from the plurality of kinds of roles are determined for each of a plurality of computers of the same model.

8. The program according to claim 1, wherein the device information includes information that identifies the computer or a model of the computer, and
in the processing for determining, a fixed role from the plurality of kinds of roles is determined for the same computer or for computers of the same model.

9. The program according to claim 1, wherein game play is possible in which a plurality of players participate for the game content, and
in the processing for determining, roles that differ for each player from the plurality of kinds of roles are determined based on the device information for computers that the players use.

10. The program according to claim 1, wherein a result of a selected action corresponding to a role other than the one role from the plurality of kinds of roles is reflected in a screen that is generated by execution of the processing for the game content.

11. A game system executing processing for game content, for which a plurality of kinds of roles are arranged, and in which operation corresponding to at least a portion of the roles is assigned to players, the game system comprising:
communication means (506) for connecting to client devices used by the players and performing transmission/reception of information;
acquisition means (501) for acquiring from a client device connected via said communication means device information including at least one of a specification and a usage condition of the client device; and
determination means (501) for determining, based on the device information acquired from the client device by said acquisition means, one role from the plurality of kinds of roles.

12. A method of controlling a game system executing processing for game content, for which a plurality of kinds of roles are arranged, and in which operation corresponding to at least a portion of the roles is assigned to players, the method comprising:
connecting (S602) to client devices used by the players and performing transmission/reception of information;
acquiring (S701) from one of the connected client devices device information including at least one of a specification and a usage condition of the client device; and
determining (S702), based on the device information acquired from the client device, one role from the plurality of kinds of roles.
